# EUROPEAN PATENT APPLICATION

(11) **EP 1 610 330 A2**
(43) Date of publication of application: **28.12.2005**
(21) Application number: 05253741.2
(22) Date of filing: 16.06.2005
(51) Int. Cl.: G11B 27/34, G11B 27/10, G06F 17/30

(54) **Music selection apparatus, music selection system and music selection method**

(30) Priority: 24.06.2004 JP 2004185760
(71) Applicant: FUJITSU TEN LIMITED, Kobe-shi, Hyogo (JP)
(72) Inventor: Matsushita, Naoto, Hyogo-ku Kobe-shi Hyogo (JP)
(74) Representative: Skone James, Robert Edmund

(57) **Abstract**

A music selection apparatus selects a piece of music from among pieces of selection target music to be selected. The music selection apparatus includes a condition setting section and a selecting section. The condition setting section sets as a selection condition one selected by a user from among pieces of information regarding a piece of music being reproduced. The selecting section selects a piece of music meeting the selection condition from among the pieces of music to be selected, on a basis of the selection condition set by the condition setting section.

## Description

The invention relates to a music selection apparatus, a music selection system and a music selection method, and more particularly relates to a music selection apparatus, a music selection system and a music selection method for selecting a piece of music desired by a user from among a large number of pieces of music stored in an HDD (Hard Disk Drive).

### 2. Description of the Related Art

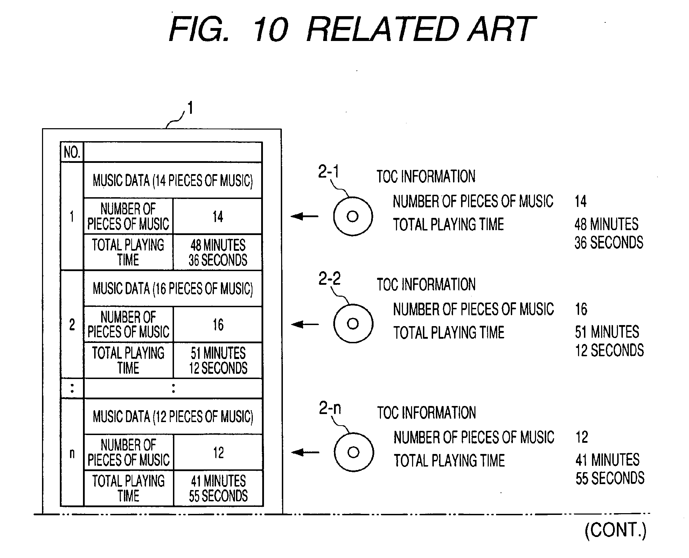

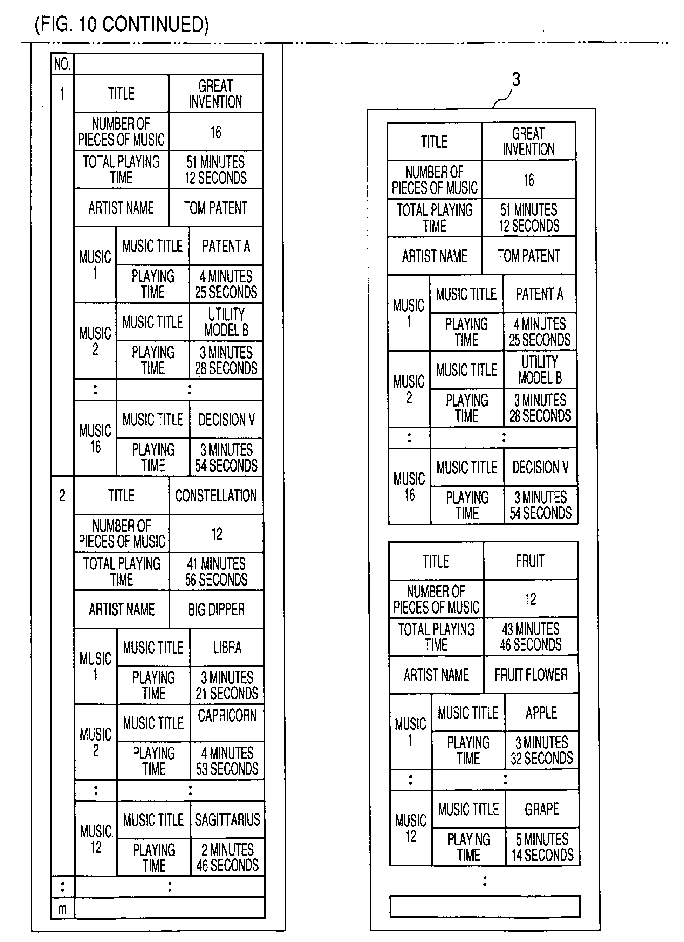

Recently, large capacity storage devices such as HDDs have spread, and it becomes possible to store data for a large number of pieces of music (e.g., several thousands to ten thousands pieces of music) in one storage device. For example, as shown in Fig. 10, HDD 1 stores data of music (hereinafter also referred to as "music data") recorded on CDs 2-1 to 2-n and TOC (Table Of Contents) information (e.g., number of pieces of music and a total playing time), and further stores information regarding a CD (a title, number of pieces of music recorded on the CD, a total playing time period of the recorded pieces of music, name of singer, tile of each piece of music, playing time of each piece of music, and genre of each piece of music).

The music data and the TOC information may be read from the CDs 2-1 to 2-n and be stored in the HDD 1. With regard to the information regarding CDs, since a service organization 3 for supplying this information is present, the information may be obtained from the service organization 3, and be stored in the HDD 1. From number of pieces of recorded music and the total playing time, it can be determined which music data stored in the HDD 1 corresponds to information regarding CDs, which is provided by the service organization 3. For example, it can be determined that the first information regarding a CD (16 pieces of music and a total playing time of 51 minutes 12 seconds) with title of "Great Invention", which is stored in the service organization 3, corresponds to the second music data (music data recorded in the CD 2-2) stored in the HDD 1.

However, it is very troublesome to find and select a piece of favorite music from such an enormous number of pieces of music. Therefore, an audio device for automatically selecting a piece of music desired by a driver or an occupant has been proposed. For example, JP-A-Hei.6-223544 discloses an audio device that allows a user to enter a "performer" and selects only pieces of music of the "performer" entered by the user.

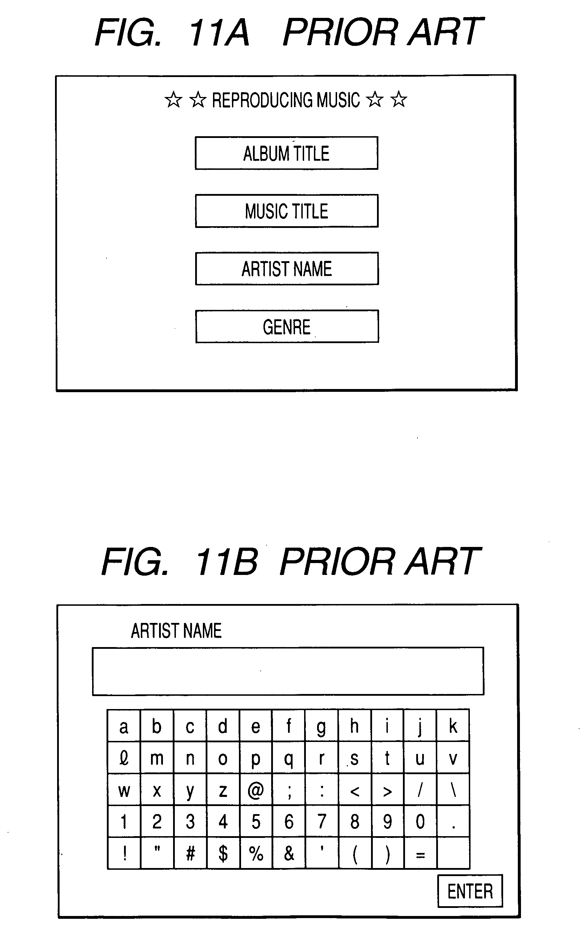

Also, another audio device has been proposed as shown in Fig 11. The audio device displays a menu screen in which plural category names are shown (see Fig. 11A). When a user selects any one of alternatives (for example, album name), then the audio device displays selection screen in response to the user's selection (see Fig. 11B). The audio device automatically selects a piece of music based on information entered by a user through the selection screen.

However, the operation is very troublesome. A simple operation is preferable especially in a vehicle. Furthermore, this selection technique is effective when a user has decided a desired music. However, the technique is not very effective when a user does not decide yet music, which he/she wants to listen to. In addition, especially in a vehicle, it is common that music is played by using a random reproducing function, regardless of the favor of the user, and that the user is listening to the music without any reason. The random reproducing function is very superior from the viewpoint of a simple operation. However, since this function merely selects a piece of music at random and plays it, the users are still not fully satisfied.

To resolve the problems described above, the invention provides a music selection apparatus, a music selection system and a music selection method, which can select a piece of music, which a user favors, without troublesome operation.

According to one embodiment of the invention, a music selection apparatus selects a piece of music from among pieces of selection target music to be selected. The music selection apparatus includes a condition setting section and a selecting section. The condition setting section sets as a selection condition, one selected by a user from among pieces of information regarding a piece of music being reproduced. The selecting section selects a piece of music meeting the selection condition from among the pieces of music to be selected, on a basis of the selection condition set by the condition setting section.

According to this configuration, one (e.g., artist name "Ayumi HAMASAKI") selected by a user from among pieces of information regarding a piece of music being reproduced (e.g., title of an album CD recording the piece of music, artist name, or genre) is set as the selection condition; and a piece of music meeting the selection condition (e.g., a sing sung by "Ayumi HAMASAKI") is selected from among the pieces of music to be selected, on a basis of the set selection condition.

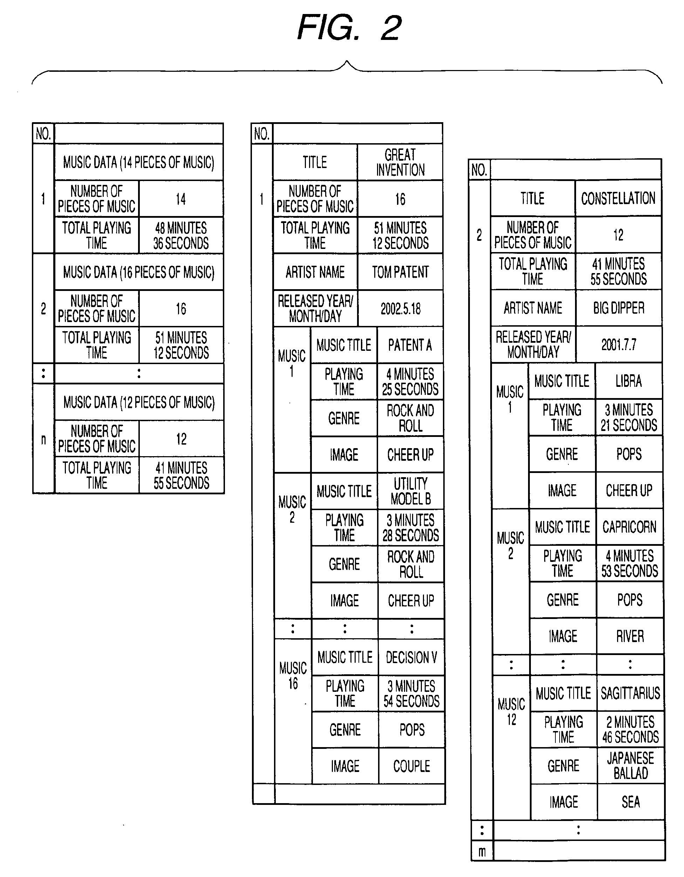

For example, when a user selects artist "Tom PATENT" as a piece of information regarding a piece of music while the following music "PATENT A" is being reproduced, a piece of music sung by the artist "Tom PATENT" such as "Utility Model B" and/or "Decision V" (see Fig. 2 described later) is selected from among pieces of music to be selected. Also, when the user selects a title "Great Invention", a piece of music recorded in an album CD with title "Great Invention" such as "Utility Model B" and/or "Decision V" is selected from among pieces of music to be selected. Accordingly, the user can listen to the desired piece of music by just performing a simple operation such as selecting one from pieces of information regarding a piece of music being reproduced.
Title name: Great Invention
Music title: PATENT A
Artist name: Taro PATENT
Genre: Rock and roll

According to one embodiment of the invention, categories of the pieces of information regarding each piece of music may include at least one of (a) a title of a storage medium storing each piece of music, (b) artist name of each piece of music, and (c) genre of each piece of music.

According to this configuration, the categories of the pieces of information regarding each piece of music include at least one of a title of a storage medium (e.g., album CD) storing each piece of music, artist name of each piece of music, and genre of each piece of music. The user can reproduce another piece of music recorded in the same album CD as the piece of music being reproduced by performing a simple operation. Also, the user can reproduce another piece of music sung by the same artist as the piece of music being reproduced by just performing a simple operation. Further, the user can reproduce another piece of music of the same genre as the piece of music being reproduced by just performing a simple operation. As a result, an apparatus that satisfies the user very much can be provided.

According to one embodiment of the invention, the music selection apparatus may further include a display device that displays on a screen, the pieces of information regarding the piece of music being reproduced.

According to this configuration, the pieces of information regarding the piece of music being reproduced are displayed on the screen. Therefore, the user can grasp the title of an album CD recording the piece of music being reproduced, the artist name and the genre, by looking at the screen. Thus, the user can correctly select the user's favorite music.

According to one embodiment of the invention, the music selection apparatus may further include a first button setting section that provides first portions where the pieces of information regarding the piece of music being reproduced are displayed, with first button functions. When the user operates one of the first portions, the condition setting section sets a piece of information displayed on the operated portion as the selection condition.

According to this configuration, the button function is provided for the portions where the pieces of information regarding the piece of music being reproduced (e.g., the title such as "Great Invention", the artist name such as "Tom PATENT" and the genre such as "Rock and roll") are displayed. For example, touch buttons are formed on a touch panel, and the user completes a required operation by just touching one of the touch buttons. What the user has to do is touching one of the portions where the pieces of the information are displayed, or moving a cursor to one of the portions. Therefore, erroneous selection by the user can be reduced drastically.

According to one embodiment of the invention, the music selection apparatus may further include a second button setting section. The display device displays on the screen the pieces of information regarding the piece of music being reproduced and category names corresponding to the pieces of information regarding the piece of music being reproduced side by side. The second button setting section provides second portions where the category names are displayed with second button functions. When the user operates one of the second portions, the condition setting section sets as the selection condition, a piece of information corresponding to the category name displayed on the operated second portion.

According to this configuration, the button functions are provided for the portions where the category names (e.g., the title, the artist name, the genre) corresponding to the pieces of information regarding the piece of music being reproduced are displayed. For example, touch buttons are formed on a touch panel, and the user completes a required operation by just touching one of the touch buttons. What the user has to do is touching one of the portions where the pieces of the information are displayed, or moving a cursor to one of the portions. Therefore, erroneous selection by the user can be reduced drastically.

Also, in almost cases, the pieces of information regarding music such as music title and artist name are changed for each piece of music. If touch buttons are provided for the portions where the pieces of information regarding the piece of music are displayed, characters displayed on the touch buttons are changed for each piece of music. Depending on a shape and size of the touch buttons, one user may not prefer change in characters displayed on the touch buttons.

On the other hand, according to this configuration, since the characters displayed on the touch buttons are "title", "artist", "genre" or the like, it is not necessary to change these characters when a piece of music is changed. Therefore, these touch buttons have a good appearance.

According to one embodiment of the invention, the music selection apparatus may further include a random selecting section and a random reproducing section. The random selecting section selects a piece of music from among the pieces of music to be selected randomly. The random reproducing section reproduces at least part of the piece of music selected by the random selecting section.

According to this configuration, even when piece of music are reproduced randomly, the user can listen to desired music by just performing a simple operation such as selecting one of pieces of information regarding a piece of music being reproduced. Therefore, when music is being reproduced using the random reproducing function regardless of the favor of the user and a piece of music fitting to feeling of the user happens to be reproduced, the user can reproduce a piece of music fitting to his/her feeling by just performing a simple operation such as selecting one of pieces of information regarding the piece of music being reproduced.

According to one embodiment of the invention, the music selection apparatus may further include a voice inputting section and a voice recognizing section. The user inputs voice through the voice inputting section. The voice recognizing section recognizes the voice input through the voice inputting section and outputs recognition information. The condition setting section sets the selection condition on a basis of the recognition information. In a music reproducing mode, vocabulary, which the voice recognizing section is able to recognize, is limited to a predetermined vocabulary including category names of the pieces of information regarding the pieces of music.

According to this configuration, the user can select one of pieces of information regarding the piece of music being reproduced by uttering voice without operating the operation buttons. Also, vocabulary, which the voice recognizing section is able to recognize, is limited to a predetermined vocabulary including the category names of the pieces of information regarding the pieces of music. Therefore, accuracy of voice recognition can be enhanced.

According to one embodiment of the invention, the music selection apparatus may further include an introducing section that introduces the pieces of information regarding the piece of music being reproduced, via voice.

According to this configuration, the pieces of information regarding the piece of music being reproduced are introduced via voice. For example, from the album tile in order, the title of an album is introduced as "Great Invention", the music title is introduced as "PATENT A", the artist name is introduced as "Tom PATENT", and the genre is introduced as "Rock and roll". With this arrangement, the user can grasp the information regarding the piece of music being reproduced without moving his/her eyes.

According to one embodiment of the invention, when the user inputs a selection instruction through the voice recognizing section (x) during a period in which the introducing section introduces a piece of information regarding the piece of music being reproduced or (y) within a predetermined period after the introducing section has introduced a piece of information regarding the piece of music being reproduced, the condition setting section may set the piece of introduced information as the selection condition.

According to this configuration, when the user issues a selection instruction (such as depressing a specific button, or saying "That's it!") (x) during a period in which the introducing section introduces a piece of information regarding the piece of music being reproduced or (y) within a predetermined period after the introducing section has introduced a piece of information regarding the piece of music being reproduced (e.g., within a blank period until introduction of a next piece of information is started), the piece of introduced information is set as the selection condition.

Assume that, from the album title in order, the album title is "Great Invention"; two second later, the music title is introduced as "PATENT A"; another two second later, the artist name is introduced as "Tom PATENT"; and still another two second later, the genre is introduced as "Rock and roll". When a user depresses a specific button while the artist name is introduced as "Tom PATENT" or before the introduction of the genre is started, the artist name "Tom PATENT" is set as the selection condition. Therefore, the user can listen to the desired music by just performing a very simple operation.

According to one embodiment of the invention, a music selection system selects a piece of music from among pieces of music to be selected. The music selection system includes a terminal device used by a user and an information processing device used by a service organization who supplies music data. The information processing device exchanges data with the terminal device via a network. The terminal device includes a first transmitting section and a reproducing section. The first transmitting section transmits to the information processing device, data indicating (p) one selected by the user from among pieces of information regarding a piece of music being reproduced or (q) one of categories of the pieces of information regarding the piece of music being reproduced. The reproducing section receives and reproduces the music data supplied from the information processing device. The information processing device includes a condition setting section, a selecting section, and a second transmitting section. The condition setting section sets the piece of information selected by the user as a selection condition, on a basis of the data transmitted from the terminal device. The selecting section selects a piece of music meeting the selection condition from among the pieces of music to be selected, on a basis of the selection condition set by the condition setting section. The second transmitting section transmits music data selected by the music selecting section to the terminal device.

According to this configuration, one (e.g., artist name "Ayumi HAMASAKI") selected by a user from among pieces of information regarding a piece of music being reproduced (e. g., title of an album CD recording the piece of music, artist name, or genre) is set as the selection condition; and a piece of music meeting the selection condition (e.g., a sing sung by "Ayumi HAMASAKI") is selected from among the pieces of music to be selected, on a basis of the set selection condition.

For example, when a user selects artist "Tom PATENT" as a piece of information regarding a piece of music while the music "PATENT A" described above is being reproduced, a piece of music sung by the artist "Tom PATENT" such as "Utility Model B" and/or "Decision V" is selected from among pieces of music to be selected. Also, when the user selects a title "Great Invention", a piece of music recorded in an album CD with title "Great Invention" such as "Utility Model B" and/or "Decision V" is selected from among pieces of music to be selected. Accordingly, the user can listen to the desired piece of music by just performing a simple operation such as selecting one from pieces of information regarding a piece of music being reproduced.

Furthermore, since the service organization performs the process for selecting a piece of music meeting the selection condition, it is not necessary for the terminal device used by the user (e.g., a device, which the user needs to purchase and attach to a vehicle) to have a function for performing this process. Further, since the service organization is in charge of managing music data, the terminal device can be provided at a low cost.

According to one embodiment of the invention, a music selection method selects a piece of music from among pieces of music to be selected. The music selection method includes setting as a selection condition, one selected by a user from among pieces of information regarding a piece of music being reproduced; and selecting a piece of music meeting the selection condition from among the pieces of music to be selected, on a basis of the set selection condition.

According to this configuration, one (e.g., artist name "Ayumi HAMASAKI") selected by a user from among pieces of information regarding a piece of music being reproduced (e.g., title of an album CD recording the piece of music, artist name, or genre) is set as the selection condition; and a piece of music meeting the selection condition (e.g., a sing sung by "Ayumi HAMASAKI") is selected from among the pieces of music to be selected, on a basis of the set selection condition. Therefore, the user can listen to a desired music by just performing a simple operation such as selecting one of the pieces of information regarding the piece of music being reproduced.

### BRIEF DESCRIPTION OF THE DRAWINGS

Fig. 1 is a schematic block diagram showing main portions of an audio system including a music selection apparatus (or employing a music selection method) according to a first embodiment of the invention.
Fig. 2 is a diagram showing part of data stored in an HDD.
Fig. 3 is a flowchart showing process performed by a microcomputer of an audio apparatus and a microcomputer of a display device, which make up the audio system including the music selection apparatus (or employing the music selection method) according to the first embodiment.
Fig. 4 is a diagram showing an example of an operating screen displayed on the display device.
Fig. 5A is a flowchart showing the process performed by the microcomputer of the audio apparatus making up the audio system including the music selection apparatus (or employing the music selection method) according to the first embodiment.
Fig. 5B is a flowchart showing the process performed by the microcomputer of the audio apparatus making up the audio system including the music selection apparatus (or employing the music selection method) according to the first embodiment.
Fig. 6 is a diagram showing an example of an operating screen displayed on the display device.
Fig. 7A is a flowchart showing process performed by a microcomputer of an audio apparatus making up an audio system including a music selection apparatus (or employing a music selection method) according to a second embodiment of the invention.
Fig. 7B is a flowchart showing the process performed by the microcomputer of the audio apparatus making up the audio system including the music selection apparatus (or employing the music selection method) according to the second embodiment.
Fig. 8 is a schematic block diagram showing main portions of a music selection system according to a third embodiment of the invention.
Fig. 9A is a flowchart showing process performed by a microcomputer of a terminal device and a microcomputer of a server, which make up a music selection system according to the third embodiment.
Fig. 9B is a flowchart showing the process performed by the microcomputer of the terminal device and the microcomputer the server that constitute the music selection system according to the third embodiment.
Fig. 10 is a diagram showing part of data stored in an HDD.
Fig. 11 is a diagram showing an example of an operating screen displayed on the display device.
Fig. 12 is a diagram showing an example of an operating screen displayed on the display device when a user selects a piece of desired music from pieces of music, which are stored in a HDD and meet a selection condition.

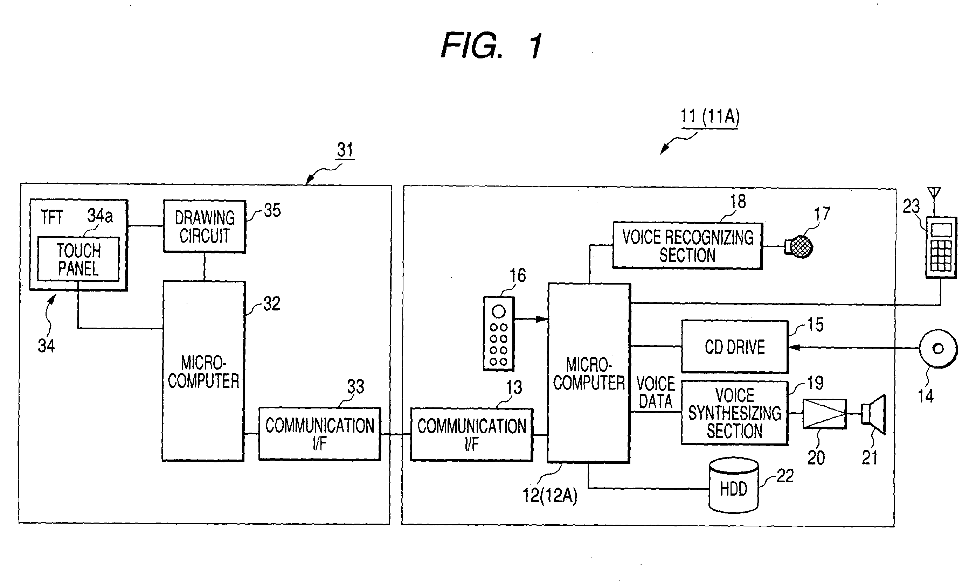

A music selection apparatus, a music selection system and a music selection method according to preferred embodiments of the invention will now be described with reference to the drawings. Fig. 1 is a schematic block diagram showing main portions of an audio system including a music selection apparatus (or employing a music selection method) according to a first embodiment of the invention. Reference numeral 11 designates an audio apparatus serving as a main body of the audio system. The audio apparatus 11 is connected to a display device 31 via a communication line L.

The audio apparatus 11 includes: a microcomputer 12 having a CPU; a communication interface 13 for exchanging data with the display device 31; a CD drive 15 for reading from a music CD 14 music data (data representing music itself) and TOC information; a remote controller 16 having button switches; a voice recognizing section 18 for processing an electrical signal converted through a microphone 17 and recognizing a speech; a voice synthesizing section 19 for processing character data from the microcomputer 12 and generating synthesized voice data; an amplifier 20 for amplifying the synthesized voice data generated by the voice synthesizing section 19; and a loudspeaker 21 for outputting as a voice the amplified synthesized voice data.

An HDD 22 constituted by a magnetic disk (not shown) is also connected to the microcomputer 12. Data is readable from/writable into the HDD 22, and various types of data such as music data and data regarding music information are stored in the HDD 22. A mobile communication device 23 such as a cellular phone connected to the microcomputer 12 is used for receiving information from a server (not shown). The microcomputer 12 can obtain information (e.g., information regarding music) from the server through the mobile communication device 23. What stores data is not limited to the HDD 22, but may be implemented by a large capacity recording medium such as a DVD appropriately.

Fig. 2 is a diagram showing part of the music data and part of the information regarding pieces of music, which are stored in the HDD 22. In the HDD 22, music data recorded on CDs 2-1 to 2-n (see Fig. 10) and data regarding the TOC information (e.g., number of pieces of music stored in a CD and a total playing time) are recorded on the HDD 22. The HDD 22 further stores information regarding the CD (e.g., title, number of pieces of music recorded in the CD, a total playing time for the music recorded, artist name, released year, month and day, and title of each piece of music, playing time of each piece of music, genre of each piece of music, image of each piece of music). The image is expressed as music suitable for couples, a Christmas song or music to cheer up.

The music data and the data regarding the TOC information may be read from the CDs 2-1 to 2-n and be stored into the HDD 22. The information regarding CDs (i.e., music information) may be obtained through the mobile communication device 23 from an information supplying organization, and be stored in the HDD 22. From number of pieces of recorded music and the total playing time, it can be determined which music data stored in the HDD 1 corresponds to information regarding CDs, which is provided by the service organization 3. For example, it can be determined that the first information regarding a CD (16 pieces of music and a total playing time of 51 minutes 12 seconds) with title of "Great Invention", which is stored in the service organization 3, corresponds to the second music data (music data recorded in the CD 2-2) stored in the HDD 1.

The display device 31 includes: a microcomputer 32 having a CPU; a communication interface 33 for exchanging data with the audio apparatus 11; a display section 34 having a display screen 34a serving as a touch panel; and a drawing circuit 35 for controlling the screen.

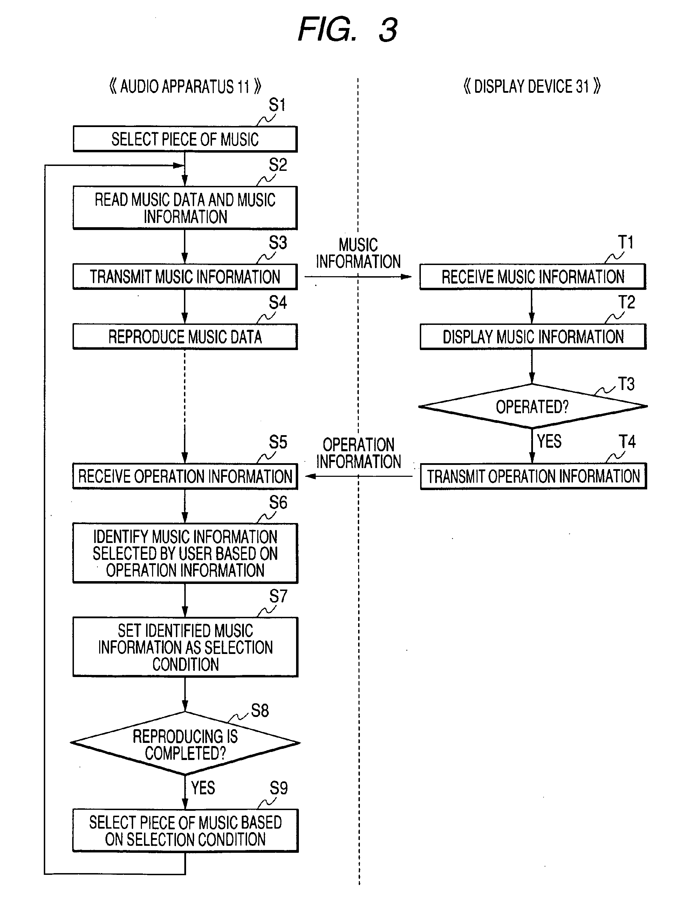

With reference to a flowchart shown in Fig. 3, a brief explanation will be given for process performed by the microcomputer 12 of the audio apparatus 11 and the microcomputer 32 of the display device 31, which make up the audio system including the music selection apparatus (or employing the music selection method) according to the first embodiment. This processing is performed when a user issues a music reproducing instruction by manipulating the remote controller 16 or by touching the touch panel 34a.

First, the audio apparatus 11 (the microcomputer 12) selects a piece of music to be reproduced (step S1); then reads corresponding music data and information regarding the selected music (e.g., a title a CD recording the selected music, name of the music, artist name, genre and image of the music) from the HDD 22 based on the selection result (step S2); transmits the read information regarding the music (i.e., information regarding a piece of music to be reproduced) to the display device 31 as constituent components of a screen (step S3); and thereafter, reproduces the music data to thereby output music from the loudspeaker 21 (step S4).

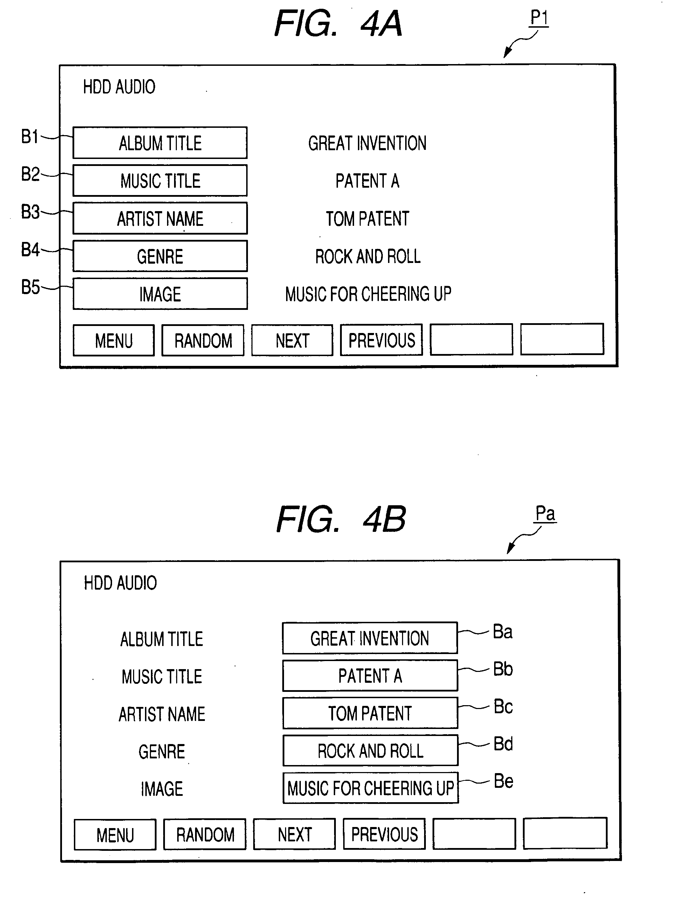

When the display device 31 (the microcomputer 32) receives the information regarding the piece of music transmitted from the audio apparatus 11 as the constituent components of the screen (step T1), the display device 31 (the microcomputer 32) generates drawing data based on the information regarding the piece of music and outputs the generated drawing data to the drawing circuit 35 to thereby displays, for example, a screen P1 shown in Fig. 4A on the display section 34 (step T2). On the screen P1 shown in Fig. 4A, pieces of information regarding a piece of music being currently reproduced and category names corresponding to this information are displayed side by side. Touch buttons B1 to B5 are provided for portions where the category names are displayed, and the user can select these categories by touching these portions. In this case, the touch buttons are provided for the category names. However, according to another embodiment, as shown in a screen Pa in Fig. 4B, touch buttons Ba to Be may be provided for portions that represent pieces of information regarding a piece of music such as an album name and an artist name. Alternatively, these two types may be employed.

The display device 31 (the microcomputer 32) determines as to whether one of the touch buttons B1 to B5 is selected (step T3). When the display device 31 determines that one of the touch buttons B1 to B5 is selected, operation information is transmitted to the audio apparatus 11 (step T4).

When the audio apparatus 11 (the microcomputer 12) receives the operation information transmitted from the display device 31 (step S5), the audio apparatus 11 (the microcomputer 12) identifies information regarding a piece of music selected by the user based on the received operation information (step S6). For example, when a user selects "artist" as a category while a piece of music "PATENT A", which is recorded in an album CD with title of "Great Invention" and sung by the artist "Tom PATENT", is being reproduced, the audio device 11 (the microcomputer 12) identifies the artist "Tom PATENT" as the information regarding the piece of music selected by the user.

The audio apparatus 11 (the microcomputer 12) sets the identified information as a selection condition (e.g., the artist "Tom PATENT") (step S7). When the audio apparatus 11 (the microcomputer 12) determines that reproducing of music data is completed (step S8), the audio apparatus 11 selects a piece of music meeting the selection condition from the HDD 22 based on the set selection condition (step S9) and thereafter, returns to step S2.

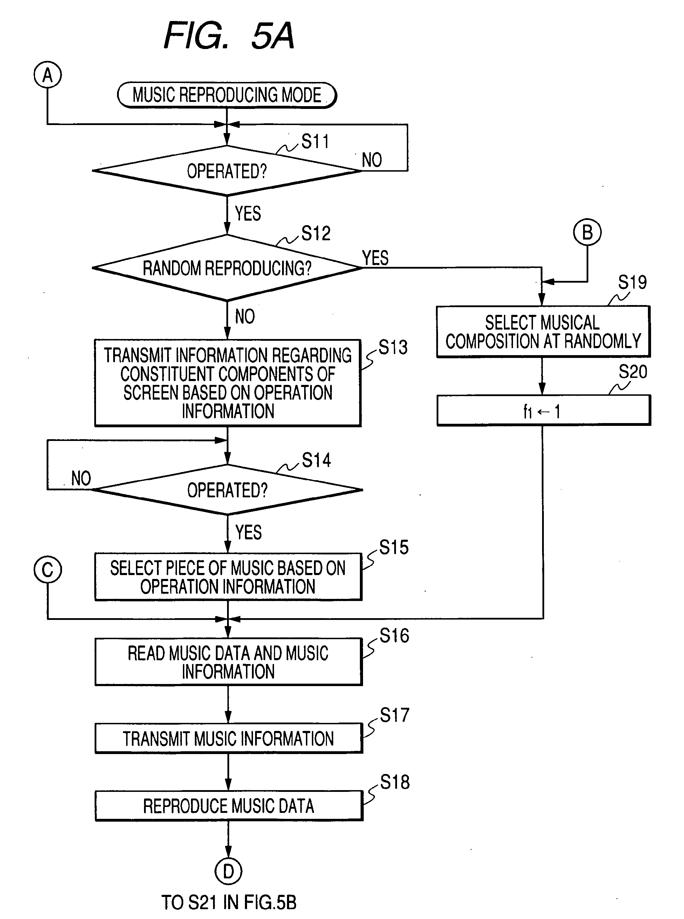

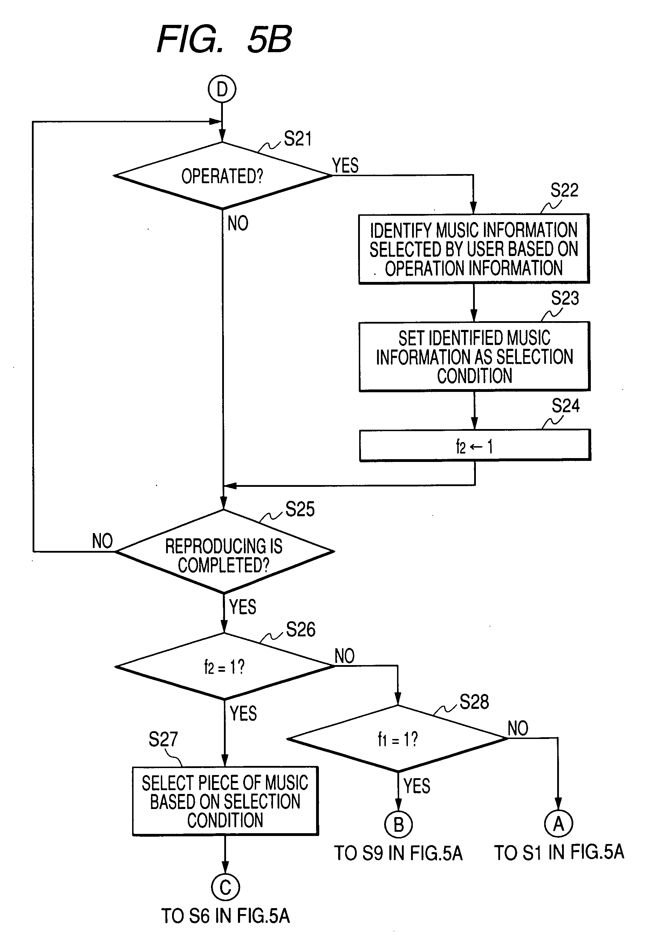

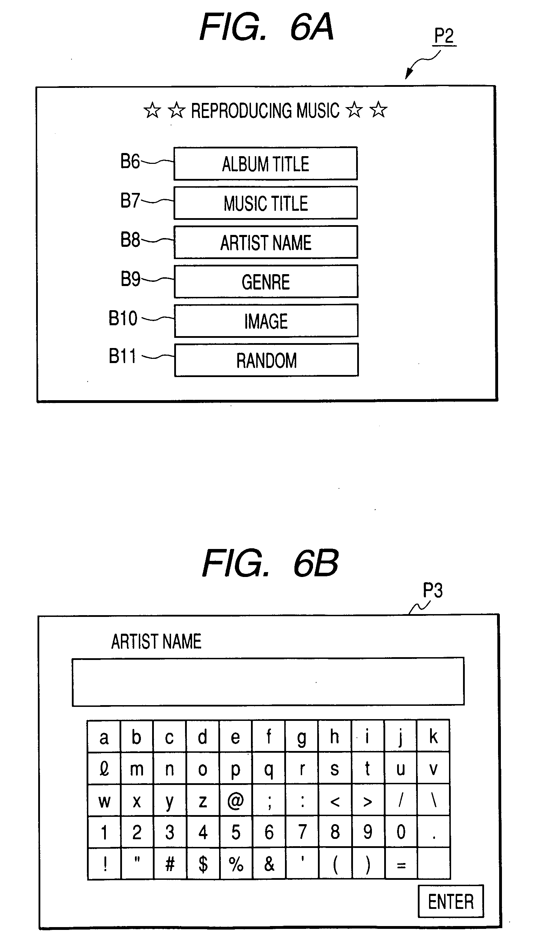

With reference to flowcharts shown in Figs. 5A and 5B, a brief explanation will now be given for the process performed by the microcomputer 12 of the audio apparatus 11 making up the audio system including the music selection apparatus (or employing the music selection method) according to the first embodiment. This process is initiated when a user operates the remote controller 16 or touches the touch panel 34a to change to a music mode. Further, when an instruction for changing to the music mode is issued, a screen shown in Fig. 6A is displayed on the display device 34.

A plurality of touch buttons B6 to B11 are arranged on a screen P2 in Fig. 6A. By selecting one of these touch buttons B6 to B10, a user can select a piece of music from the desired category. Also, by selecting the touch button B11, a user can select random reproducing.

First, the microcomputer 12 of the audio apparatus 11 determines as to whether or not the microcomputer 12 has received the operation information, which is transmitted from the display device 31 and is generated by touching the touch panel 34a (or the operation information, which is transmitted from the remote controller 16 and is generated by operating the remote controller 16) (step S11).

When the microcomputer 12 concludes that the microcomputer 12 has received the operation information, then the microcomputer 12 determines based on the received operation information, as to whether or not the user selects the random reproducing (for example, whether or not the user touches the touch button B11) (step S12). When the microcomputer 12 concludes that the user does not select the random reproducing (i.e., concludes that the user selects music selection by an album name, title of music or a artist name), the microcomputer 12 transmits information regarding constituent components of the screen to the display device 31, based on the received operation information (step S13). For example, when a user selects music selection by an artist name, the microcomputer 12 transmits information required to display a screen P3 shown in Fig. 6B on the display section 34.

When the screen P3 shown in Fig. 6B is displayed on the display device 34, the microcomputer 12 determines as to whether or not the microcomputer 12 has received operation information, which is transmitted from the display device 31 and is generated by touching the touch panel 34a (or operation information, which is transmitted from the remote controller 16 and is generated by operating the remote controller 16) (step S14).

When the microcomputer 12 concludes that the microcomputer 12 has received the operation information, the microcomputer 12 selects a piece of music to be reproduced based on the received operation information (step S15), reads corresponding music data and information regarding the piece of music from the HDD 22 based on the selection result (step S16), transmits the read information regarding the piece of music (that is, the information regarding the piece of music to be reproduced) to the display device 31 as a constituent component of the screen (step S17), reproduces the music data to thereby output the music from the loudspeaker 21 (step S18), and thereafter proceeds to step S21 (Fig. 5B). As described above, when the display device 31 receives the information regarding the piece of music as the constituent component of the screen, the display device 31 displays the screen P1 shown in Fig 4A on the display section 34.

On the other hand, when the microcomputer 12 concludes that the user selects the random reproducing of music at the step S12, then the microcomputer 12 selects music from the HDD 22 randomly (step S19), sets a random reproducing flag f₁ indicating performing the random reproducing to "1" (step S20) , and thereafter proceeds to step S16.

At step S21, during a period in which the screen P1 shown in Fig. 4A is being displayed on the display device 34, the microcomputer 12 determines as to whether or not the microcomputer 12 has received operation information, which is transmitted from the display device 31 and is generated by touching the touch panel 34a (or operation information, which is transmitted from the remote controller 16 and is generated by operating the remote controller 16).

When the microcomputer 12 concludes that the microcomputer 12 has received the operation information, then the microcomputer 12 identifies information regarding a piece of music selected by the user (step S22). For example, when the user selects "artist" as a category while a piece of music "PATENT A", which is recorded in an album CD with title of "Great Invention" and sung by the artist "Tom PATENT", is being reproduced, the microcomputer 12 identifies the artist "Tom PATENT" as the information regarding the piece of music selected by the user.

Then, the microcomputer 12 sets the identified information as the selection condition (for example, the artist "Tom PATENT") (step S23), sets to "1" a setup flag f₂ indicating that the selection condition has been set (step S24), thereafter determines as to whether or not reproducing of the music data has been completed (step S25). If the microcomputer 12 concludes that reproducing of the music data has been completed, then the microcomputer 12 determines as to whether or not the setup flag f₂ is "1" (step S26).

When the microcomputer 12 concludes that the setup flag f₂ is "1", the microcomputer 12 selects a piece of music meeting the selection condition from the HDD based on the selection condition (step S27), and thereafter returns to step S6 (Fig. 5A). On the other hand, when the microcomputer 12 concludes that the setup flag f₂ is not "1", then the microcomputer 12 determines as to whether or not the random reproducing flag f₁ is "1" (step S28).

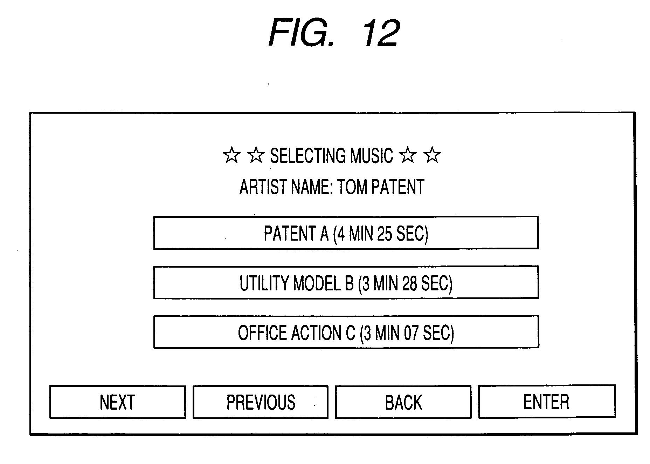

Here, the process executed in step S27 will be described in more detail. Assuming that the user has selected "artist" as a category while a piece of music "PATENT A", which is recorded in an album CD with title of "Great Invention" and sung by the artist "Tom PATENT", is being reproduced in step S22 and that the HDD 22 stores music data and information regarding pieces of music shown in Fig. 2. In this case, the microcomputer 12 selects a piece of music, which is sung by the artist "Tom PATENT", from among the pieces of music stored in the HDD 22. More specifically, the microcomputer 12 selects a piece of music from fifteen pieces of music, which is sung by the artist "Tom PATENT", other than the piece of music "PATENT A". Alternatively, the microcomputer 12 may select a piece of music from the sixteen pieces of music including the piece of music "PATENT A". Further alternatively, the microcomputer 12 may read information regarding pieces of music, which are sung by the artist "Tom PATENT" from the HDD 22 and output the read information regarding the pieces of music to the display 31 as constituent components of a screen. At this time, the display 31 displays the screen shown in Fig. 12 and allows the user to select a piece of music from among the pieces of music meeting the selection condition.

When the microcomputer 12 concludes that the random reproducing flag f₁ is "1", since it is not necessary to perform the steps S22 to S24, process returns to step S9 (Fig. 5A). On the other hand, when the microcomputer 12 concludes that the random reproducing flag f₁ is not "1", process returns to step S1 (Fig. 5A).

When the microcomputer 12 concludes at step S21 that the microcomputer 12 has not received the operation information, since it is not necessary to perform steps S22 to S24, process jumps to step S25. Also, when the microcomputer 12 concludes at the step S25 that reproducing of the music data has not been completed, process returns to step S21.

According to the audio system including the music selection apparatus (or employing the music selection method) of the first embodiment, one (e.g., the artist name "Tom PATENT") selected by a user from among pieces of information regarding a piece of music being reproduced (e.g., title of an album CD recording the piece of music being reproduced, artist name of the piece of music being reproduced, or genre of the piece of music being reproduced) is set as a selection condition; and a piece of music meeting the selection condition (e.g., a song sung by the artist "Tom PATENT") is selected from the HDD 22 on a basis of the set selection condition. Therefore, the user can listen to the desired piece of music by just performing a simple operation such as selecting one from pieces of information regarding a piece of music being reproduced. Also, since it is possible to set a selection condition not only during normal music reproducing but also during random reproducing, the audio system that satisfies a user much more can be provided.

According to the music selection apparatus (or the music selection method) of the first embodiment, either in the normal music reproducing or in the random reproducing, after reproducing of the entire music data is completed, process proceeds to reproducing of next piece of music. However, according to another embodiment, a scan function may be operated simultaneously. For example, in the random reproducing, process does not proceed to reproducing of a next piece of music after reproducing of the entire music data is completed, but the process may proceed to a next piece of music after reproducing of the music data for first several seconds.

Further, according to the music selection apparatus (or the music selection method) of the first embodiment, a piece of information regarding the piece of music being reproduced is identified on a basis of the operation information, which is transmitted from the display device 31 by touching the touch panel 34a by the user during a period in which the screen P1 shown in Fig. 4A is being displayed on the display section 34, or the operation information, which is transmitted from the remote controller 16 by operating the remote controller 16 by the user during a period in which the screen P1 shown in Fig. 4A is being displayed on the display section 34. However, according to another embodiment, a piece of information regarding a piece of music being reproduced may be identified on the basis of information output from the voice recognizing section 18 by user's voice.

According to this configuration, the user can select a piece of information regarding a piece of music being reproduced by his/her voice without touching the touch panel 34a or operating the remote controller 16. Also, voice recognition vocabulary, which the voice recognizing section 18 can recognize, may be limited to category names of the information regarding music (e.g., title, artist, or genre) and vocabulary regarding music reproducing (e.g., "random reproducing") to thereby enhance accuracy of the voice recognition.

Next, an explanation will now be given for an audio system including a music selection apparatus (or employing a music selection method) according to a second embodiment of the invention. Since the same configuration as the audio system shown in Fig. 1 is employed except for the microcomputer 12 and the audio apparatus 11 including the microcomputer 12, different reference numerals are allotted to the microcomputer 12 and the audio apparatus 1, and description for the other portions will be omitted.

Reference numeral 11A designates an audio apparatus serving as a main body of the audio system. The audio apparatus 11 is connected to a display device 31 via a communication line L. The audio apparatus 11A includes: a microcomputer 12A having a CPU; a communication interface 13; a CD drive 15; a remote controller 16; a voice recognizing section 18; a voice synthesizing section 19; an amplifier 20; and a loudspeaker 21.

An HDD 22 is also connected to the microcomputer 12A. Data is readable from/writable into the HDD 22, and various types of data such as music data and data regarding music information are stored in the HDD 22. A mobile communication device 23 connected to the microcomputer 12 is used for receiving information from a server (not shown). The microcomputer 12 can obtain information (e.g., information regarding music) from the server through the mobile communication device 23.

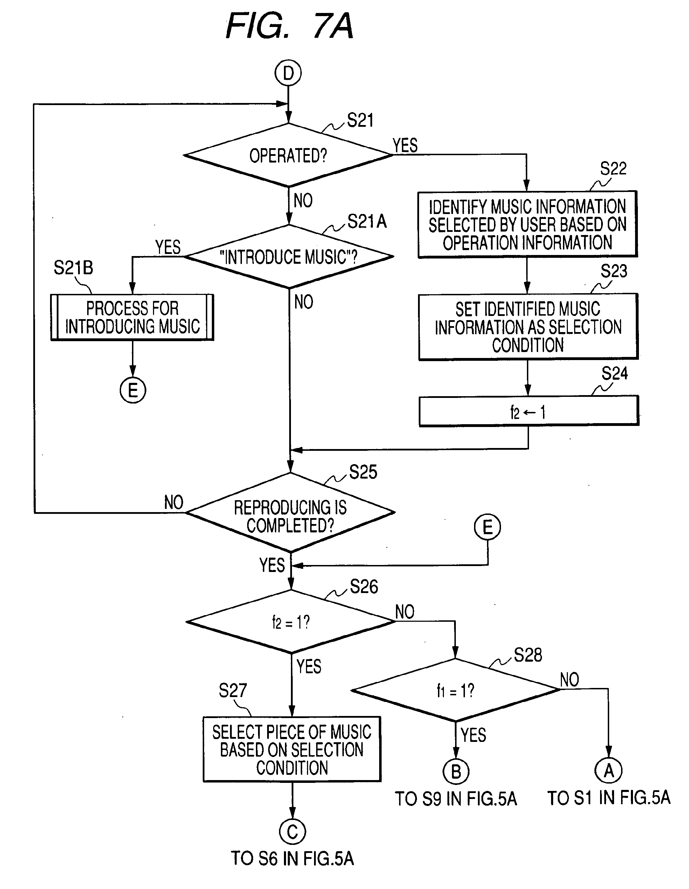

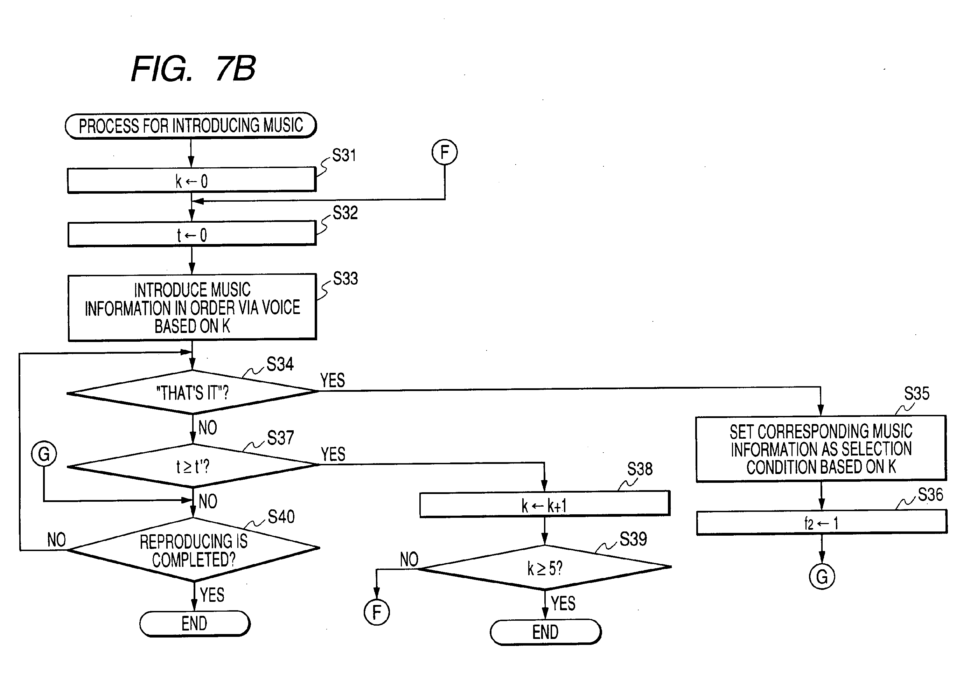

With reference to flowcharts in Figs. 7A and 7B, a brief explanation will now be given for process performed by the microcomputer 12A of the audio apparatus 11A making up the audio system including a music selection apparatus (or employing the music selection method) according to the second embodiment. This process is initiated when the user operates the remote controller 16 or touches the touch panel 34a to thereby instruct changing to a music mode.

Since the process performed by the microcomputer 12A is the same as that performed by the microcomputer 12 of the audio apparatus 11 in Figs. 5A and 5B, except for process following the conclusion of No at step S21, only the process performed after step S21 will be explained.

At step S21, during a period in which the screen P1 shown in Fig. 4A is being displayed on the display device 34, the microcomputer 12A determines as to whether or not the microcomputer 12A has received operation information, which is transmitted from the display device 31 and is generated by touching the touch panel 34a (or operation information, which is transmitted from the remote controller 16 and is generated by operating the remote controller 16).

When the microcomputer 12A concludes that the microcomputer 12A has not received the operation information, then the microcomputer 12A determines as to whether or not the microcomputer 12A has receives operation information output from the voice recognizing section 18 by user's voice (e.g., "introduce music") (at step S21A). When the microcomputer 12A concludes that the user has said, for example, "introduce music", then the process proceeds to a voice process mode shown in Fig. 7B and the microcomputer performs process for introducing pieces of information regarding a piece of music being reproduced via voice (step S21B). On the other hand, when the microcomputer 12A concludes that the user has not said "introduce music", process proceeds to step S25.

At step S31 shown in Fig. 7B, a coefficient k is set to "0", and then, a timer t is set to "0" and is started (step S32). Thereafter, the microcomputer 12A generates introduction message data for introducing a piece of information regarding a piece of music being reproduced on the basis of the coefficient k, and outputs the generated introduction message data to the voice synthesizing section 19 to thereby output introduction message from the loudspeaker 21 via voice (step S33).

A method for generating the introduction message data may include, for example, reading from the HDD 22 basic introduction message data such as "The album title is XXXXX"; "The music title is YYYYY"; "The artist name is ZZZZZ"; "Genre is AAAAA"; or "Image of music is BBBBB", and incorporating a piece of information regarding a piece of music thereinto. Also, when the coefficient k is "0", the album title is introduced; when the coefficient k is "1", the music title is introduced; when the coefficient k is "2", the artist name is introduced; when the coefficient k is "3", the genre is introduced; and when the coefficient k is "4", the image of music is introduced.

Then, the microcomputer 12A determines as to whether or not the microcomputer 12A has received operation information, which is output from the voice recognizing section 18 when the user utters voice (e.g., "Play back it") (step S34). If the microcomputer 12A concludes that the user utters, for example, "Play back it", the microcomputer 12A sets as the selection condition a piece of information regarding a piece of music being introduced at that time (or a piece of information regarding a piece of music, introduction of which was started within a predetermined time t'), based on the coefficient k (step S35). Then, the microcomputer 12A sets to "1" the setup flag f₂ indicating that the selection condition has been set. Thereafter, process proceeds to step S40. For example, when the coefficient k is "2", since the artist name is introduced, the microcomputer 12A sets as the selection condition the artist who sings the piece of music being reproduced.

On the other hand, when the microcomputer 12A concludes that the user has not said "Play back it" at step S34, then the microcomputer 12A determines as to whether or not the timer t is equal to or larger than the predetermined time t' (e.g., 4 seconds) or more (step S37). When the microcomputer 12A concludes that the timer t is equal to or larger than the predetermined time t' or more, then the microcomputer 12A adds "1" to the coefficient k (step S38) and determines as to whether or not the coefficient k is equal to or larger than "5" (step S39). When the microcomputer 12A concludes that the coefficient k is less than "5" (i.e., information regarding a piece of music to be introduced is left) , the process returns to step S32. On the other hand, when the microcomputer 12A concludes that the coefficient k is equal to or larger than "5" (i.e., introducing of the information regarding a piece of music is completed), the process for introducing music is terminated.

When the microcomputer 12A concludes at step S37 that the timer t is less than the predetermined time t' , the process proceeds to step S40 and the microcomputer 12A determines as to whether or not reproducing of the music data has been completed. When the microcomputer 12A concludes that reproducing of the music data has been completed, the process for introducing music is terminated. On the other hand, when the microcomputer 12A concludes that reproducing of the music data has not been completed, the process returns to step S34.

According to the audio system including the music selection apparatus (or employing the music selection method) of the second embodiment, one (e.g., the artist name "Tom PATENT") selected by a user from among pieces of information regarding a piece of music being reproduced (e.g., title of an album CD recording the piece of music being reproduced, artist name of the piece of music being reproduced, or genre of the piece of music being reproduced) is set as a selection condition; and a piece of music meeting the selection condition (e.g. , a song sung by the artist "Tom PATENT") is selected from the HDD 22 on a basis of the set selection condition. Therefore, the user can listen to the desired piece of music by just performing a simple operation such as selecting one from pieces of information regarding a piece of music being reproduced.

Also, when a user issues a selection instruction (e.g., a user says "Play back it") during a period in which each piece of information regarding a piece of music being reproduced is introduced or a predetermined period after the introduction (e.g., a blank period until introduction of a next piece of information is started), the introduced information is set as the selection condition. Therefore, the user can listen to the desired piece of music by just performing a very simple operation.

In the audio system including the music selection apparatus (or employing the music selection method) according to the first or the second embodiment, the audio apparatus serving the main body of the system and the display device are separately provided. However, these apparatuses may be provided integrally.

In addition, in the audio system including the music selection apparatus (or employing the music selection method) according to the first or the second embodiment, a next piece of music is selected after reproducing of a piece of music being reproduced is completed. However, timing of selecting a piece of music is not limited thereto. Also, according to another embodiment, plural pieces of music may be selected based on the selection condition to prepare a music reproducing list. With this arrangement, the processing efficiency can be improved.

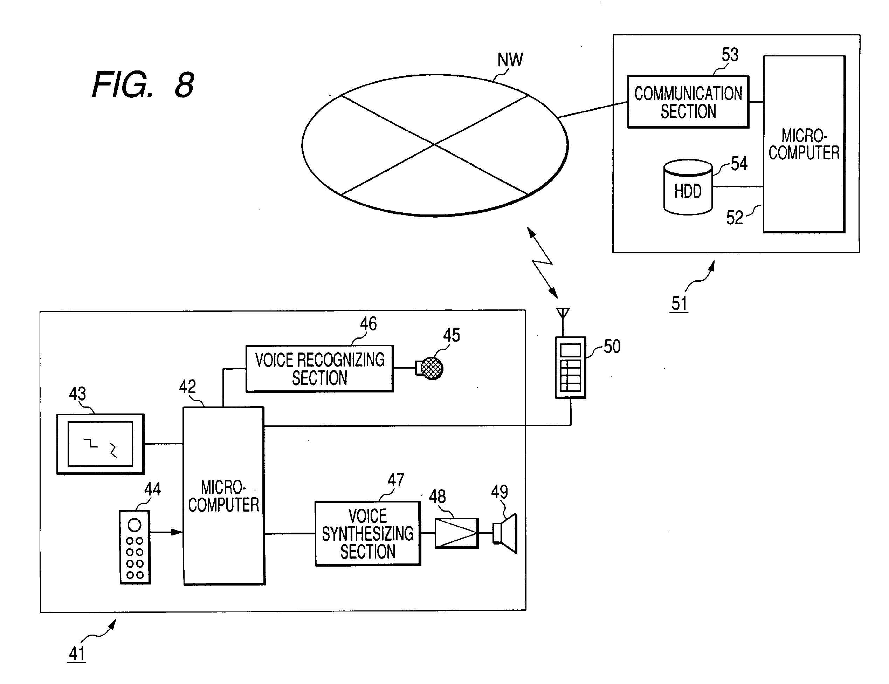

Fig. 8 is a schematic block diagram showing main portions of a music selection system according to a third embodiment of the invention. In Fig. 8, reference numeral 41 designates a terminal device mounted on a vehicle. The terminal device 41 includes: a microcomputer 42 having a CPU; a display device 43; a remote controller 44 having button switches; a voice recognizing section 46 for processing an electrical signal converted through a microphone 45 to recognize voice; a voice synthesizing section 47 for processing character data received from the microcomputer 42 to generate synthesized voice data; an amplifier 48 for amplifying the synthesized voice data generated by the voice synthesizing section 47; and a loudspeaker 49 for outputting the amplified synthesized voice data as voice. A mobile communication device 50 such as a cellular phone connected to the microcomputer 42 is used to exchange data with a server 51 through a network NW.

The server 51 serving as an information processing device includes a microcomputer 52, a communication section 53, and an HDD 54. The microcomputer 52 has a CPU. The communication section 53 exchanges data with an external device (e.g., the terminal device 41) connected through the network NW. The HDD 54 is constructed by a magnetic disk (not shown). Various types of data such as music data and data regarding music information is readable from/writable into the HDD 54. The HDD 54 is configured to store data shown in Fig. 2 as with the HDD 22 (see Fig. 1).

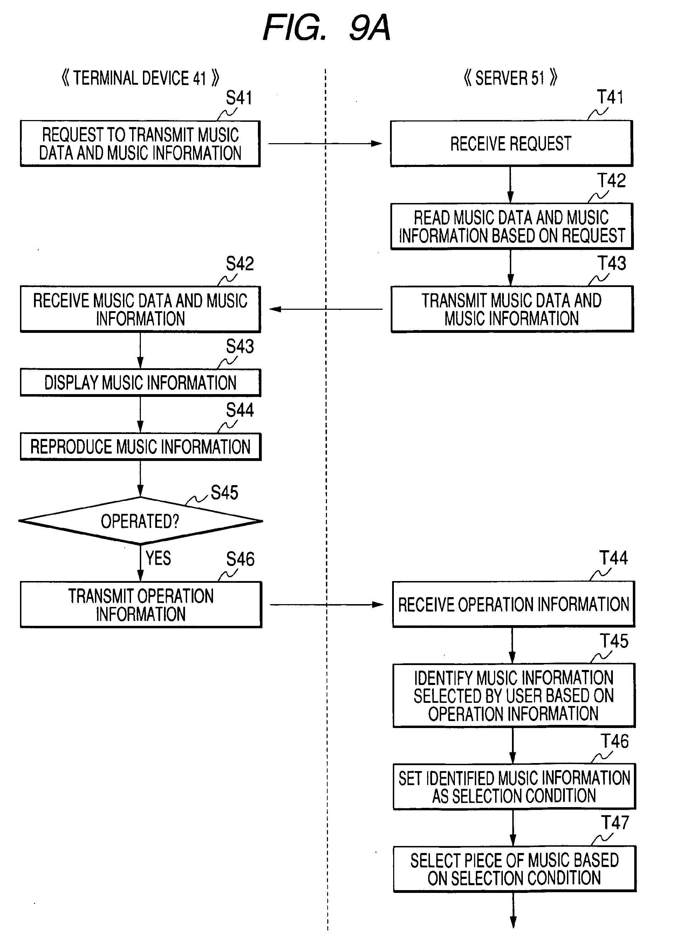

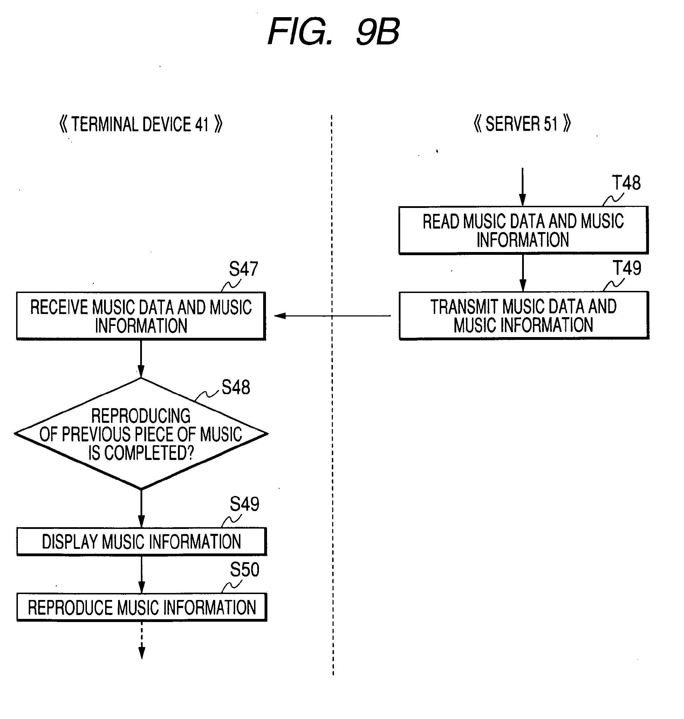

With reference to flowcharts shown in Figs. 9A and 9B, an explanation will now be given for process performed by the microcomputer 42 of the terminal device 41 and the microcomputer 52 of the server 51, which make up a music selection system according to the third embodiment of the invention. The process is initiated when a user selects a piece of music by operating a remote controller 44.

First, the terminal device 41 (the microcomputer 42) requests the server 51 to transmit music data of the piece of music selected by the user and information regarding the piece of music (e.g., title of an album CD recording the piece of music, title of the piece of music, artist name, genre, image of the piece of music) (step S41).

Upon receiving a information request from the terminal device 41 (step T41), the server 51 reads the music data and the information regarding the piece of music from the HDD 54 (step T42), and transmits to the terminal device 41, the music data and the information regarding the piece of music (step T43).

Upon receiving the music data and the information regarding the piece of music transmitted from the server 51 (step S42), the terminal device 41 (the microcomputer 42) displays a screen containing pieces of information regarding the piece of music as shown in Fig. 4A, on the display device 43 (step S43), and thereafter, reproduces the music data to output the music via the loudspeaker 49 (step S44).

The terminal device 41 (the microcomputer 42) determines as to whether or not any one of the touch buttons B1 to B5 (see Figs. 4A) provided on the screen is selected (step S45). When the microcomputer 42 concludes that one of the touch buttons B1 to b5 is selected, the microcomputer 42 transmits operation information to the server 51 (step S46).

Upon receiving the operation information transmitted from the terminal deice 41 (step T44), the server 51 (the microcomputer 52) identifies a piece of information regarding the piece of music selected by the user, based on the received operation information (step T45). For example, when the user selects "artist" as a category while a piece of music "PATENT A", which is recorded in an album CD with title of "Great Invention" and sung by the artist "Tom PATENT", is being reproduced, the microcomputer 52 identifies the artist "Tom PATENT" as the information regarding the piece of music selected by the user.

The server 51 (the microcomputer 52) sets the piece of identified information as a selection condition (e.g., the artist "Tom PATENT") (step T46) , selects from the HDD 54 a piece of music meeting the selection condition (step T47), reads corresponding music data and information regarding the piece of music based on a selection result from the HDD 54 (step T48) , and transmits the read music data and the read information of the piece of music to the terminal device 41 (step T49). In this case, plural pieces of music may be selected to prepare a music reproducing list.

The terminal device 41 (the microcomputer 42) receives from the server 51 the music data and the information regarding the piece of music (step S47). Thereafter, when the microcomputer 42 concludes that reproducing of previous piece of music is completed (step S48), the microcomputer 42 displays screen containing pieces of information regarding a next piece of music on the display device 43 (step S49) and reproduces the music data of the next piece of music to output music through the loudspeaker 49 (step S50).

According to the music selection system of the third embodiment, one (e.g., the artist name "Tom PATENT") selected by a user from among pieces of information regarding a piece of music being reproduced (e.g., title of an album CD recording the piece of music being reproduced, artist name of the piece of music being reproduced, or genre of the piece of music being reproduced) is set as a selection condition; and a piece of music meeting the selection condition (e.g., a song sung by the artist "Tom PATENT") is selected from pieces of music to be selected on a basis of the set selection condition. Therefore, the user can listen to the desired piece of music by just performing a simple operation such as selecting one from pieces of information regarding a piece of music being reproduced.

Furthermore, since the server 51 performs the process for selecting a piece of music meeting the selection condition, it is not necessary for the terminal device 41 used by the user (e.g., a device, which the user needs to purchase and attach to a vehicle) to have a function for performing this process. Further, since the server 51 is in charge of managing music data, the terminal device 41 can be provided at a low cost.

According to the third embodiment, the display device 43 is integrated with the terminal device 41 that makes up the music selection system. However, according to another embodiment, it is not necessary for a main section of the terminal device and the display device to be integrated with each other. These devices may be separated from each other.

## Claims

1. A music selection apparatus for selecting a piece of music from among pieces of selection target music to be selected, the music selection apparatus comprising:
a condition setting section that sets as a selection condition, one selected by a user from among pieces of information regarding a piece of music being reproduced; and
a selecting section that selects a piece of music meeting the selection condition from among the pieces of music to be selected, on a basis of the selection condition set by the condition setting section.

2. The music selection apparatus according to claim 1, wherein categories of the pieces of information regarding each piece of music include at least one of (a) a title of a storage medium storing each piece of music, (b) artist name of each piece of music, and (c) genre of each piece of music.

3. The music selection apparatus according to any one of claims 1 to 2, further comprising:
a display device that displays on a screen, the pieces of information regarding the piece of music being reproduced.

4. The music selection apparatus according to claim 3, further comprising:
a first button setting section that provides first portions where the pieces of information regarding the piece of music being reproduced are displayed, with first button functions, wherein:
when the user operates one of the first portions, the condition setting section sets a piece of information displayed on the operated portion as the selection condition.

5. The music selection apparatus according to any one of claims 3 to 4, further comprising:
a second button setting section, wherein:
the display device displays on the screen the pieces of information regarding the piece of music being reproduced and category names corresponding to the pieces of information regarding the piece of music being reproduced side by side;
the second button setting section provides second portions where the category names are displayed with second button functions; and
when the user operates one of the second portions, the condition setting section sets as the selection condition, a piece of information corresponding to the category name displayed on the operated second portion.

6. The music selection apparatus according to any one of claims 1 to 5, further comprising:
a random selecting section that selects a piece of music from among the pieces of music to be selected randomly; and
a random reproducing section that reproduces at least part of the piece of music selected by the random selecting section.

7. The music selection apparatus according to any one of claims 1 to 6, further comprising:
a voice inputting section through which the user inputs voice; and
a voice recognizing section that recognizes the voice input through the voice inputting section and outputs recognition information, wherein:
the condition setting section sets the selection condition on a basis of the recognition information; and
in a music reproducing mode, vocabulary, which the voice recognizing section is able to recognize, is limited to a predetermined vocabulary including category names of the pieces of information regarding the pieces of music.

8. The music selection apparatus according to any one of claims 1 to 7, further comprising:
an introducing section that introduces the pieces of information regarding the piece of music being reproduced, via voice.

9. The music selection apparatus according to claim 8, wherein:
when the user inputs a selection instruction through the voice recognizing section (x) during a period in which the introducing section introduces a piece of information regarding the piece of music being reproduced or (y) within a predetermined period after the introducing section has introduced a piece of information regarding the piece of music being reproduced, the condition setting section sets the piece of introduced information as the selection condition.

10. A music selection system for selecting a piece of music from among pieces of music to be selected, the music selection system comprising:
a terminal device used by a user; and
an information processing device used by a service organization who supplies music data, the information processing device exchanges data with the terminal device via a network, wherein:
the terminal device comprises:
a first transmitting section that transmits to the information processing device, data indicating (p) one selected by the user from among pieces of information regarding a piece of music being reproduced or (q) one of categories of the pieces of information regarding the piece of music being reproduced; and
a reproducing section that receives and reproduces the music data supplied from the information processing device; and the information processing device comprises:
a condition setting section that sets the piece of information selected by the user as a selection condition, on a basis of the data transmitted from the terminal device;
a selecting section that selects a piece of music meeting the selection condition from among the pieces of music to be selected, on a basis of the selection condition set by the condition setting section; and
a second transmitting section that transmits music data selected by the music selecting section to the terminal device.

11. A music selection method for selecting a piece of music from among pieces of music to be selected, the music selection method comprising:
setting as a selection condition, one selected by a user from among pieces of information regarding a piece of music being reproduced; and
selecting a piece of music meeting the selection condition from among the pieces of music to be selected, on a basis of the set selection condition.
